# EUROPÄISCHE PATENTSCHRIFT

(11) **EP 1 051 830 B1**
(45) Veröffentlichungstag und Bekanntmachung des Hinweises auf die Patenterteilung: **22.03.2006**
(21) Anmeldenummer: 99904712.9
(22) Anmeldetag: 13.01.1999
(51) Int. Cl.: H04M 3/30

(54) **VERFAHREN ZUR SCHNELLEN PRÜFUNG DER FUNKTIONSFÄHIGKEIT EINES TEILNEHMERSATZES**
METHOD FOR RAPIDLY TESTING THE RELIABILITY PERFORMANCE OF A SUBSCRIBER CIRCUIT
PROCEDE DE VERIFICATION RAPIDE DE LA FIABILITE DE FONCTIONNEMENT D'UN GROUPE D'ABONNES

(30) Priorität: 26.01.1998 DE 19802825
(43) Veröffentlichungstag der Anmeldung: 15.11.2000
(73) Patentinhaber: SIEMENS AKTIENGESELLSCHAFT, 80333 München (DE)
(72) Erfinder: DOLLINGER, Rudolf, D-81243 München (DE)
(86) Internationale Anmeldenummer: PCT/DE1999/000065
(87) Internationale Veröffentlichungsnummer: WO 1999/038304

(56) Entgegenhaltungen:
- EP-A- 0 451 759
- EP-A- 0 543 161
- ROCHE, B; GOUTTEBEL, R; FERRIEU, G; BEIERLE, J: "Electronic BORSCHT circuits and the local network" NTG-FACHBERICHTE, Bd. 73, 15. - 19. September 1980, Seiten 72-75, XP002107998 GERMANY

## Beschreibung

Die Erfindung betrifft eine schnelle Prüfung der Funktionsfähigkeit eines Teilnehmersatzes einer digitalen Fernsprechvermittlungstelle.

Ein Prüfungsverfahren auf Funktionsfähigkeit ist bisher in der Weise bekannt, daß der Teilnehmersatz mittels mindestens eines Relais von der Teilnehmerleitung abgetrennt und an eine zentrale Testeinheit angeschlossen wird.

Dieses Verfahren ist deswegen nachteilig, weil auf der Teilnehmeranschlußbaugruppe, auf der sich mehrere Teilnehmersätze befinden können, zusätzlich platz- und kostenaufwendige Relais plaziert werden müssen. Da die Prüfung auf Funktionsfähigkeit mit Hilfe einer zentralen, externen Testeinheit durchgeführt wird, die einen Platz von zwei Teilnehmeranschlußbaugruppen einnimmt, werden durch sie außerdem Anschlußmöglichkeiten für mindestens 32 Teilnehmer an die Fernspechvermittlungsstelle verdrängt.

Außerdem kann das Prüfverfahren mittels der zentralen Testeinheit nur seriell auf die einzelnen Teilnehmersätze angewandt werden.

Ferner ist durch die Europäische Patentanmeldung 0 451 759 bekannt, eine Prüfung von Übertragungseigenschaften eines Teilnehmersatzes samt der angeschlossenen Teilnehmerleitungen in den Teilnehmersatz zu integrieren. Dieses Prinzip beruht darauf, auf verschiedene Stellen des Empfangszweiges und des Sendeszweiges eines im Teilnehmersatz enthaltenen Signalprozessors zuzugreifen, um die an diesen Stellen auftretenden Spannungen, die entweder durch den normalen Fernsprechberrieb verursacht oder gesondert eingespeist werden, zur Errichtung bestimmter Übertragungseigenschaften eines Teilnehmersatzes samt Teilnehmerleitungen mittels Bildung eines paarweisen Korrelationsprodukts heranzuziehen. Dieses Verfahren ist jedoch nicht für eine schnelle Prüfung auf Funktionsfähigkeit eines Teilnehmersatzes geeignet, da der Signalprozessor durch die zahlreich auszuwertenden Spannungswerte sowie durch die komplexe Berechnungsmethode der Übertragungseigenschaften wie z.B. Reflexionsdämpfung oder Sendepegel, mit Speicher- und Rechenaufgaben stark belastet wird, weswegen die Ermittlung eines Endergebisses für das schnelle Prüfungsverfahren zu lange dauert.

Die Aufgabe der Erfindung besteht nun darin, ein möglichst schnelles Prüfungsverfahren auf Funktionsfähigkeit des Teilnehmersatzes mit zugleich geringem schaltungstechnischen und kostensparenden Aufwand zu erzielen.

Diese Aufgabe wird durch die im Kennzeichen des Anspruchs 1 angegebenen Mittel gelöst.

Das der Erfindung zugrundeliegende Prinzip besteht insbesondere darin, die Testfunktionen des Prüfungsverfahrens unter Ausnutzung bereits vorhandener Bauelemente in den Teilnehmersatz zu integrieren, ohne daß der Signalprozessor wesentlich durch zeitaufwendige Speicher- und Rechenaufgaben belastet wird.

Dies geschieht dadurch, daß ein sich im Teilnehmersatz befindlicher Tongenerator, dessen Aufgabe vorwiegend darin besteht, beim Auftreten einer Störung ein Suchtonsignal zu senden, um dem Wartungspersonal das Auffinden der Störung zu erleichtern, eine Wechselspannung erzeugt und mittels eines im Teilnehmersatz enthaltenen Verstärkers der erzeugte Wechselstrom in die Anschlußzweige, die dem Anschluß der Adern einer Teilnehmerleitung dienen, eingespeist wird. Die durch die Wechselspannung hervorgerufenen, über an die Anschlußzweige angeschalteten Kondensatoren zur Gewährleistung der elektromagnetischen Verträglichkeit, nach Masse abfließenden Wechselströme werden gemessen. Anschließend werden die gemessenen Wechselstromwerte addiert und mit einem Stromschwellwert frequenzselektiv verglichen. Bei Unterschreitung des Stromschwellwerts durch den summierten Wechselstromwert wird eine Störung im Teilnehmersatz festgestellt.

Mit Hilfe des erfindungsgemäßen Prüfungsverfahrens können also Relais auf der Teilnehmeranschlußbaugruppe, auf der sich der Teilnehmersatz befindet, eingespart werden.

Ein weiterer Vorteil wird durch das erfindungsgemäße Vorgehen dadurch erzielt, daß die zentrale, externe Testeinheit überflüssig geworden ist und somit zwei Baugruppensteckplätze für weitere Teilnehmeranschlüsse (ca. 32 Teilnehmer) zur Verfügung stehen.

Außerdem kann das Prüfungsverfahren auf Funktionsfähigkeit eines Teilnehmersatzes dezentral und parallel für die einzelnen Teilnehmersätze durchgeführt werden.

Des weiteren wird der Signalprozessor durch das erfindungsgemäße Prüfungsverfahren nicht zusätzlich mit einem zeitaufwendigen Ermittlungsverfahren von Übertragungseigenschaften, sondern lediglich mit einem Vergleichsvorgang von Stromwerten belastet, so daß das Prüfungsverfahren in der erfindungsgemäßen Art schnell durchgeführt werden kann.

Weitere Ausgestaltungen der Erfindung sind in Unteransprüchen gekennzeichnet.

Nach der im Anspruch 2 erwähnten Methode wird das Prüfungsverfahren insofern in vorteilhafter Weise erweitert, als das in Anpruch 1 angegebene Verfahren im Falle eines negativen Prüfergebnisses wiederholt wird, wobei die vom Tongenerator erzeugte Wechselspannung im Wiederholungsfall eine andere Frequenz besitzt. Erst bei erneutem Unterschreiten des Stromschwellwerts wird das Vorhandensein einer Störung im Teilnehmersatz bestätigt.

Im Anspruch 3 wird erwähnt, daß der Betrag des Stromschwellwerts von der Frequenz der vom Tongenerator erzeugten Wechselspannung unter Berücksichtigung der Frequenzabhängigkeit des Wechselspannungswiderstandes der Kondensatoren abhängig gemacht wird.

Das erfindungsgemäße Prüfungsverfahren wird durch das im Anspruch 4 beschriebene Merkmal dahingehend ergänzt, daß dann, wenn ein an den zu prüfenden Teilnehmersatz angeschlossener Teilnehmer den Hörer eines Telefons oder eines anderen Endgerätes abhebt, das Prüfungsverfahren sofort abgebrochen wird. Ansonsten könnte der Teilnehmer neben eines Freitons einen Prüfton im Telefonhörer hören.

Nachstehend wird ein Ausführungsbeispiel der Erfindung unter Bezugnahme auf eine Zeichnung noch näher erläutert.

In der Zeichnung zeigen:
Figur 1 die Systemarchitektur einer Fernsprechvermittlungsstelle, deren Teilkomponente ein Teilnehmersatz ist, für den die Prüfung auf Funktionsfähigkeit durchgeführt wird.
Figur 2 einen in erfindungsgemäßer Weise ausgestalteten Teilnehmersatz mit Bestandteilen zur Durchführung der integrierten Testfunktionen.

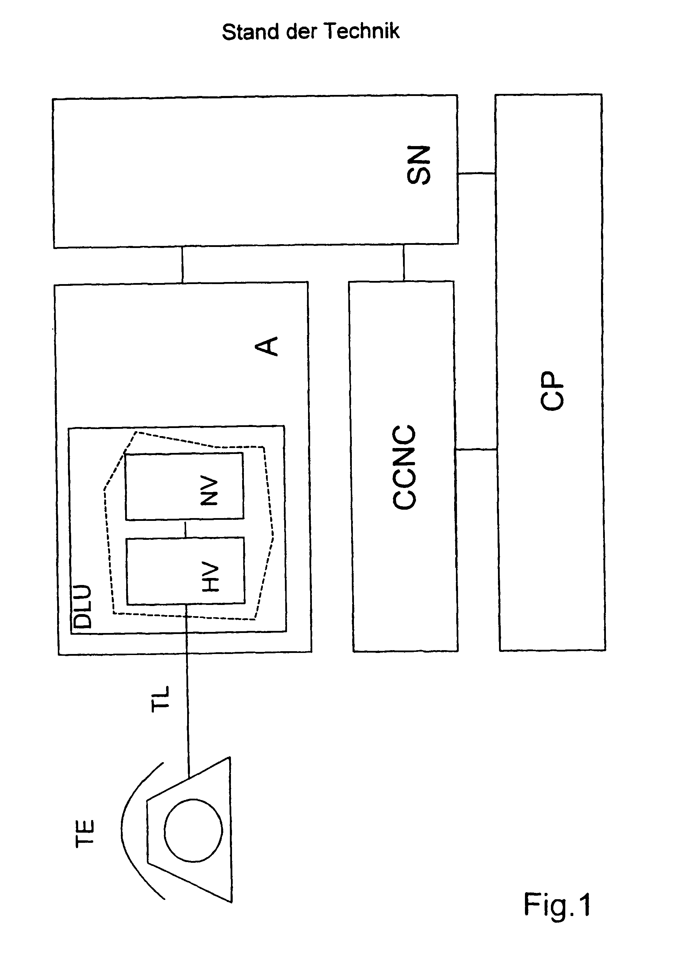

In der Figur 1 sind die zentralen Komponenten einer digitalen Zeitmultiplex-Fernsprechvermittlungsstelle dargestellt. Solche Komponenten sind ein Koppelnetz SN, eine Zeichengabesteuerung CCNC, ein Koordinationsprozessor CP und der Anschlußbereich A. Der Anschlußbereich A enthält mehrere digitale Teilnehmerleitungseinheiten DLU, an die über Teilnehmerleitungen TL entweder direkt oder mittels einer Nebenstelienanlage Teilnehmerendgeräte, die in der Figur 1 symbolisch mit einem Telefon TE gekennzeichnet sind, angeschlossen sind.

Die Teilnehmerleitungseinheit enthält unter anderem mehrere Teilnehmersätze, die die Schnittstelle zwischen den Teilnehmerleitungen und der digitalen Umgebung der Fernsprechvermittlungsstelle bilden.

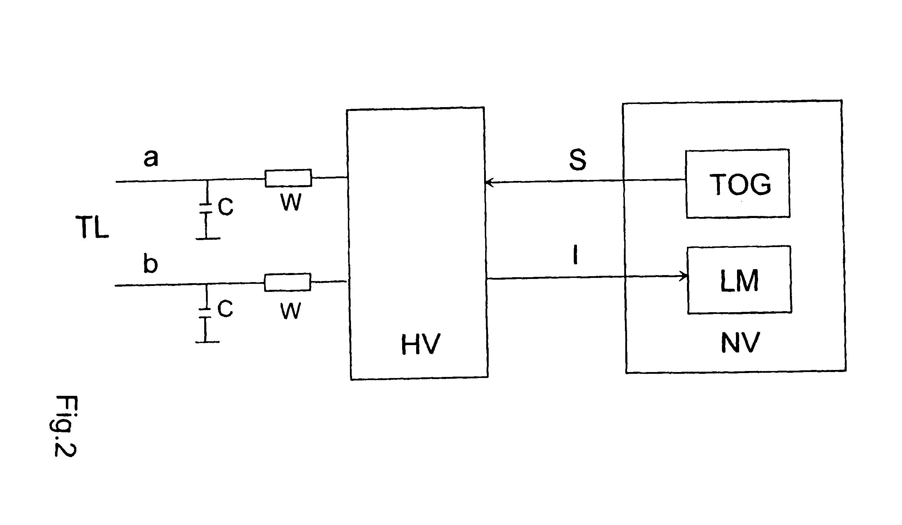

In der Figur 1 ist ein solcher Teilnehmersatz mit Hilfe eines mit einer gestrichelten Linie gezeichneten Kastens angedeutet. Der hier dargestellte Teilnehmersatz dient dem Anschluß einer analogen Teilnehmerleitung TL. Wie auch in Figur 2 erkennbar, besteht ein solcher Teilnehmersatz aus zwei zentralen Teilen, einem Hochvoltteil HV und einem nachgeschalteten Niedervoltteil NV, von dem aus über weitere hier nicht dargestellte Teilkomponenten des Anschlußbereichs eine Verbindung mit dem Koppelfeld SN besteht. Ein solcher Hochvoltteil beinhaltet in erster Linie Leitungstreiber sowie Elemente zur Teilnehmerleitungszustandsindikation. Der Niedervoltteil dient im wesentlichen als Analog/Digital-Schnittstelle, realisiert unter anderem die 2-Draht-4-Draht-Wandlung und enthält einen Signalprozessor.

In der Figur 2 sind weitere Bestandteile des Niedervoltteils, ein Tongenerator TOG und ein sogenanntes LM-Modul (Level-Measurement) LM, das zu einem Stromwertvergleich benutzt wird, zu sehen. Der Tongenerator erzeugt eine Wechselspannung beispielsweise mit einer Frequenz von 3 kHz. Der zum Hochvoltteil weitergeleitete Wechselstrom S wird im Hochvoltteil HV mittels eines hier nicht dargestellten Verstärkers verstärkt und in die mit den Adern a und b der Teilnehmerleitung TL verbundenen Anschlußzweige eingespeist. Die Wechselströme der Anschlußzweige fließen über je einen Widerstand W und einen an den Anschlußzweig zur Gewährleistung der elektromagnetischen Verträglichkeit angeschalteten, Kondensator C gegen Masse und werden im Hochvoltteil gemessen. Die Wechselstromwerte werden addiert und dann mit einem Skalierungsfaktor, dessen Betrag von dem verwendeten Verstärker abhängt, multipliziert. Anschließend wird der summierte Wechselstromwert I in Form eines Summensignals zum Niedervoltteil weitergeleitet, in dessen LM-Modul der summierte Wechselstromwert mit einem Stromschwellwert frequenzselektiv verglichen wird. Im Falle, daß der summierte Stromwert oberhalb des Stromschwellwerts liegt, gibt das LM-Modul das Ergebnis "Teilnehmersatz ist in Ordnung" aus. Falls der summierte Wechselstromwert den Betrag des Stromschwellwerts unterschreitet, liefert das LM-Modul das Ergebnis "Teilnehmersatz ist nicht in Ordnung".

Mit Hilfe des erfindungsgemäßen integrierten Prüfungsverfahren können inbesondere folgende Funktionalitäten des Teilnehmersatzes verifiziert werden:
- Die Funktionsfähigkeit des Tongenerators, indem er die Wechselspannung erzeugt, und des Verstärkers im Hochvoltteil, der den Wechselstrom verstärkt.
- Das Vorhandensein und die Funktionsfähigkeit der Kondensatoren, die zur Gewährleistung der elektromagnetischen Verträglichkeit an die Anschlußzweige für die Adern der Teilnehmerleitung angeschaltet sind.
- Die Funktionsfähigkeit der Strommeßeinrichtungen, die im Fernsprechbetrieb zur Messung der Teilnehmerleitungsströme dienen und in der Figur 2 nicht explizit dargestellt sind.

Eine Erweiterung des erfindungsgemäßen Prüfungsverfahrens könnte darin gesehen werden, das Verfahren für den Fall, daß das Ergebnis beim einem ersten Prüfungsdurchlauf negativ ausgefallen ist, zur Ergebnisbestätigung zu wiederholen. Im Wiederholungsdurchlauf erzeugt der Tongenerator nun eine Wechselspannung mit einer von der Wechselspannung des ersten Durchlaufs verschiedenen Frequenz (z.B. 600 Hz). Abhängig von der gewählten Frequenz der erzeugten Wechselspannung wird der Betrag des Stromschwellwerts angepaßt, wodurch die Frequenzabhängigkeit des Wechselspannungswiderstands der Kondensatoren berücksichtigt wird.

In Ergänzung zu dem oben beschriebenen Ausführungsbeispiel wird das erfindungsgemäße Prüfungsverfahren sofort abgebrochen, wenn ein Teilnehmer, der an den zu prüfenden Teilnehmersatz angeschlossen ist, den Hörer seines Telefons oder eines anderen Endgerätes abhebt, um eine Gesprächsverbindung aufzubauen. Dadurch wird verhindert, daß der Teilnehmer den Prüfton im Hörer hört.

## Patentansprüche

1. Verfahren zur schnellen Prüfung der Funktionsfähigkeit eines Teilnehmersatzes einer digitalen Fernsprechvermittlungsstelle,
**gekennzeichnet durch** folgende Merkmale:
a)nach Erzeugung einer Wechselspannung definierter Frequenz durch einen im Teilnehmersatz enthaltenen Tongenerator (TOG) wird der erzeugte Wechselstrom (S) nach einer Verstärkung **durch** einen im Teilnehmersatz enthaltenen Verstärker in die Anschlußzweige des Teilnehmersatzes, die den Anschluß der Adern (a, b) einer Teilnehmerleitung (TL) dienen, eingespeist und über einen an den Anschlußzweig für die jeweilige Ader angeschalteten Kondensator (C) gegen Masse abgeleitet,
b) wobei der Wechselstromwert jedes Anschlußzweigs gemessen und eine Summe aus den gemessenen Wechselstromwerten gebildet wird,
c) und wobei dieser summierte Wechselstromwert (I) mit einem Stromschwellwert frequenzselektiv verglichen wird, wobei im Falle des Überschreitens des Stromschwellwerts **durch** den summierten Wechselstromwert ein positives Ergebnis des Prüfungsverfahrens ausgegeben wird und im Falle des Unterschreitens des Stromschwellwerts **durch** den summierten Wechselstromwert eine Störung im Teilnehmersatz festgestellt wird.

2. Prüfungsverfahren nach Anspruch 1,
**dadurch gekennzeichnet,**
**daß** es im Falle eines Unterschreitens des Stromschwellwerts durch den summierten Wechselstromwert (I) wiederholt wird, wobei der Tongenerator (TOG) eine Wechselspannung mit einer von der Wechselspannung des ersten Durchlaufs verschiedenen Frequenz erzeugt und die Feststellung einer Störung im Teilnehmersatz erst durch ein erneutes Unterschreiten des Stromschwellwerts durch den summierten Wechselstromwert bestätigt wird.

3. Prüfungsverfahren nach Anspruch 2,
**dadurch gekennzeichnet,**
**daß** der Betrag des Stromschwellwerts von der Frequenz der durch den Tongenerator (TOG) erzeugten Wechselspannung abhängig gemacht wird.

4. Prüfungsverfahren nach einem der obigen Ansprüche,
**dadurch gekennzeichnet,**
**daß** dann, wenn ein durch einen Teilnehmer hervorgerufener Schleifenschluß während des Prüfungsverfahrens erkannt wird, das Prüfverfahren sofort abgebrochen wird.

## Claims

1. Method for a rapid test for the operability of a subscriber line circuit in a digital telephone switching centre,
**characterised by** the following features:
a) after the generation of an alternating voltage of defined frequency by means of a tone generator (TOG) contained in the subscriber line circuit and after amplification by means of an amplifier contained in the subscriber line circuit, the generated alternating current (S) is fed into the connecting branches of the subscriber line circuit, which serve to connect the wires (a,b) of a subscriber line (TL), and discharged to earth via a capacitor (C) connected to the connecting branch for the respective wire,
b) with the alternating current value of each connecting branch being measured and a sum being formed from the measured alternating current values
c) and with this sum of the alternating current values (I) being compared with a current threshold value in a frequency-selective manner, with a positive result being output for the test method, if the sum of the alternating current values exceeds the current threshold value and a malfunction being determined in the subscriber line circuit, if the sum of the alternating current values is less than the current threshold value.

2. Test method according to claim 1
**characterised in that**
if the sum of the alternating current values (I) is less than the current threshold value, it is repeated, with the tone generator (TOG) generating an alternating voltage with a frequency different from the alternating voltage of the first run and the determination of a malfunction in the subscriber line circuit only being confirmed, if the sum of the alternating current values is again less than the current threshold value.

3. Test method according to claim 2
**characterised in that**
the amount of the current threshold value is made a function of the frequency of the alternating voltage generated by the tone generator (TOG).

4. Test method according to one of the above claims, **characterised in that** if a loop closure caused by a subscriber is detected in the course of the test method, said test method is immediately interrupted.

## Revendications

1. Procédé de contrôle rapide de la fiabilité de fonctionnement d' un joncteur d' abonné d' un central de commutation téléphonique numérique
**caractérisé par** des caractéristiques suivantes :
a) après production d' un tension alternative d' une fréquence définie par un générateur de tonalité (TOG) contenu dans un joncteur d' abonné , on injecte le courant (S) alternatif produit après une amplification par un amplificateur contenu dans le joncteur d' abonné dans les branches de connexion du joncteur d' abonné , qui servent à la connexion des fils (a , b) d' une ligne (TL) d' abonné , et on le découple de la masse par un condensateur (C) relié à la branche de connexion pour le fil respectif,
b) on mesure la valeur du courant alternatif de chaque branche de connexion et on forme une somme des valeurs de courant alternatif mesurées ,
c) et on compare sélectivement en fréquence cette valeur (I) de courant alternatif additionnée à une valeur de seuil de courant en émettant , dans le cas où la valeur de seuil de courant est dépassée par la valeur de courant alternatif additionnée , un résultat positif du procédé de contrôle et en constatant , dans le cas où la valeur de courant alternatif additionnée est inférieure à la valeur de seuil de courant , une panne du joncteur d' abonné.

2. Procédé de contrôle suivant la revendication 1
**caractérisé**
**en ce que** , dans le cas où le fait que la valeur (I) du courant alternatif additionnée est inférieure à la valeur de seuil de courant se répète , le générateur (TOG) de tonalité produisant une tension alternative ayant une fréquence différente de la tension alternative du premier passage et la constatation d' une panne dans le joncteur d' abonné n' étant confirmée que par le fait qu' à nouveau la valeur du courant alternatif additionnée est inférieure à la valeur de seuil du courant

3. Procédé de contrôle suivant la revendication 2
**caractérisé**
**en ce que** l'on fait dépendre la valeur absolue du seuil de courant de la fréquence de la tension alternative produite par le générateur (TOG) de tonalité.

4. Procédé de contrôle suivant l'une des revendications précédentes
**caractérisé**
**en ce que** l' on interrompt immédiatement le procédé de contrôle lorsque l'on reconnaît , pendant le procédé de contrôle , une fermeture de boucle provoquée par un abonné.
